# EUROPÄISCHE PATENTSCHRIFT

(11) **EP 0 908 430 B1**
(45) Veröffentlichungstag und Bekanntmachung des Hinweises auf die Patenterteilung: **21.08.2002**
(21) Anmeldenummer: 98118736.2
(22) Anmeldetag: 05.10.1998
(51) Int. Cl.: C05C 9/00, C05G 3/08, C05C 7/00

(54) **Verfahren zur Herstellung von Dicyandiamid enthaltenden Harnstoff-Düngemittel-Granulaten**
Process for the obtention of urea fertiliser granulates containing dicyandiamide
Procédé d'obtention des engrais sous forme de granules à base d'urée contenant de la dicyandiamide

(30) Priorität: 08.10.1997 DE 19744404
(43) Veröffentlichungstag der Anmeldung: 14.04.1999
(73) Patentinhaber: SKW STICKSTOFFWERKE PIESTERITZ GmbH, 06886 Lutherstadt Wittenberg (DE)
(72) Erfinder: Lange, Heinz, 06886 Lutherstadt Wittenberg (DE); Wachsmuth, Hans-Joachim, 06888 Mühlanger (DE); Kristof, Wolfgang Dr., 06886 Lutherstadt Wittenberg (DE); Elbe, Werner, 06901 Kemberg (DE)
(74) Vertreter: HOFFMANN - EITLE

(56) Entgegenhaltungen:
- EP-A- 0 376 853
- DD-A- 231 226
- DE-A- 3 543 920
- US-A- 4 309 206

## Beschreibung

Die vorliegende Erfindung betrifft ein Verfahren zur Herstellung von Dicyandiamid-enthaltenden Harnstoff-Düngemittel-Granulaten in einem Wirbelbett-Granulator.

Es ist allgemein bekannt, daß Stickstoff-Düngemittel aus Amid- und/oder Ammonium-Verbindungen nach dem Düngen im Boden biochemisch in Nitrat umgewandelt und von den Pflanzen überwiegend in dieser Form als Nährstoff aufgenommen werden. Nachteilig ist hierbei, daß dies in der Regel mit Stickstoffverlusten verbunden ist, da die Bildung des Nitrats deutlich schneller verläuft als dessen Aufnahme durch die Pflanzen. Seit Jahren werden deshalb Möglichkeiten beschrieben, durch sogennannte Nitrifikationsinhibitoren diesen Prozeß der Pflanzenphysiologie anzupassen. Eine Möglichkeit besteht in der Zugabe von Dicyandiamid als Nitrifikationsinhibitor zum Dünger, an deren technologischer Umsetzung auch für den weltweit am meisten eingesetzten Stickstoffdünger Harnstoff seit Jahren gearbeitet wird.

Gemäß der DE-OS 3 237 905 werden granulierte Stickstoff-Düngemittel mit einer Korngröße von 3 bis 16 mm, vorzugsweise 6 bis 10 mm, und einem Dicyandiamid-Gehalt von 1 bis 30 Gew.-% beschrieben und dabei nachgewiesen, daß die Stickstoffhemmende Wirkung mit zunehmender Teilchengröße bis 8 mm ansteigt. Genaue Angaben über die Herstellung der entsprechenden Granulate sind dieser Offenlegungsschrift nicht zu entnehmen.

In der EP-A 376 853 wird die Herstellung von homogenen Stickstoff-Düngemitteln in Granulatform durch Zugabe von Dicyandiamid und Ammoniumthiosulfat zu einer Harnstoffschmelze beschrieben. Damit sich das Dicyandiamid und das Ammoniumthiosulfat in der Harnstoffschmelze gut auflösen, muß die Harnstoffschmelze bevorzugt mindestens 2 Gew.-% Feuchtigkeit enthalten. Die so erhaltene Dicyandiamid-haltige Harnstoffschmelze wird in Trommel- oder Röhrengranulatoren verarbeitet.

Die in der DE-OS 3 543 920 beschriebenen Stickstoffdüngemittel mit Langzeitwirkung können durch Vermischen der Ausgangsstoffe Harnstoff, Dicyandiamid, Calciumcarbonat und Kohlenstoff und anschließendes Granulieren nach technisch bekannten Verfahren hergestellt werden. In einer bevorzugten Ausführungsform werden diese Stickstoffdüngemittel hergestellt, indem einer wäßrigen Harnstofflösung unter CO₂-Begasung Kalkstickstoff zugegeben wird und das entstehende Reaktionsgemisch beispielsweise mittels Sprühgranulation im Fließbett verarbeitet wird.

Gemäß der US-4,309,206 werden Harnstoff-Dicyandiamid-Düngemittel hergestellt durch Schmelzen von Harnstoff zusammen mit Dicyandiamid bei Temperaturen von nicht über 125 °C und nachfolgendes Verarbeiten mit Hilfe von Prillierverfahren. Hierbei entstehen erhebliche Mengen von Ammoniak, die häufig das nachteilige Zumischen von Säuren zur Bindung des Ammoniaks erforderlich machen.

Aus der EP-A 19 881 sind Harnstoffkörner mit verbesserten anwendungstechnischen Eigenschaften und einem Gehalt von 0,1 bis 3,5 Gew.-% Dicyandiamid bekannt, die durch Prillieren einer Dicyandiamid-haltigen Harnstoffschmelze hergestellt werden. Die Zugabe von Dicyandiamid führt dabei zu einer erhöhten Festigkeit, Bruchunempfindlichkeit und besseren Fließfähigkeiten der Harnstoffprills. Aufgrund der durch den Prillprozeß bedingten geringen Teilchengröße von üblicherweise 1,5 bis 2,0 mm und des geringen Dicyandiamid-Gehaltes von maximal 3,5 Gew.-% ist die Nitrifikationswirkung derartiger Prills nicht optimal.

Schließlich wird in der DD 159 988 ein Verfahren zur Granulierung von Harnstoff-Dicyandiamid-Düngern beschrieben, wobei das Dicyandiamid in Mengen von 5 bis 50 Gew.-% Dicyandiamid-N in einer wäßrigen Harnstofflösung bei Temperaturen von 50 bis 95 °C gelöst und anschließend in einer Wirbelschicht granuliert wird. Besonders nachteilig ist dabei die Tatsache, daß das Wasser, welches durch die Harnstofflösung in die Granulationsflüssigkeit eingebracht wurde, technisch und energetisch sehr aufwendig während des Granulationsprozesses in der Wirbelschicht wieder verdampft werden muß. Die Wasserverdampfung erfordert hierbei hohe Verweilzeiten im Wirbelbett und Granulationstemperaturen von > 100 °C. Hohe Verweilzeiten und Temperaturen führen beim Harnstoff jedoch bekanntermaßen zur Biuret-Bildung, welches als Pflanzengift wirkt und somit unerwünscht ist. Außerdem kommt es bei diesen sehr hohen Granulationstemperaturen auch beim Dicyandiamid zu nicht unerheblichen Zersetzungsverlusten. Um überhaupt nennenswerte Wassermengen dabei verdampfen zu können, müssen die Tröpfchen der Granulationslösung auf < 100 µm mit Hilfe von Zweistoff-Düsen zerstäubt werden. Damit erstarren viele Schmelzetröpfchen, bevor sie auf die Granulatteilchen auftreffen, so daß sie mit der Luft als Staub aus dem Granulationsprozeß ausgetragen werden. Aus diesen Grund können derartige Verfahren nur unter Zuhilfenahme von Granulationsadditiven betrieben werden, die als Kristallisationsverzögerer fungieren.

Der vorliegenden Erfindung lag daher die Aufgabe zugrunde, ein Verfahren zur Herstellung von Dicyandiamid enthaltenden Harnstoff-Düngemittel-Granulaten zu entwickeln, welches die genannten Nachteile des Standes der Technik nicht aufweist, sondern mit geringem technischen Aufwand die Herstellung von homogenen Dicyandiamid-haltigen Harnstoff-Düngemittel-Granulaten bei geringen Dicyandiamid-Verlusten ermöglicht, die einen niedrigen Biuret-Gehalt und eine hohe nitrifikationshemmende Wirkung aufweisen und gleichzeitig ausgezeichnete Festigkeits- und Lagereigenschaften besitzen.

Diese Aufgabe wurde erfindungsgemäß dadurch gelöst, daß man
a) in eine Wasser- und Biuret-arme Harnstoffschmelze 3 bis 10 Gew.-% Dicyandiamid bezogen auf das Gewicht der Harnstoffschmelze einbringt und diese Schmelze turbulent vermischt sowie
b) anschließend die Dicyandiamid-haltige Harnstoffschmelze mit einer Temperatur von 120 bis 140 °C in einem Wirbelbett-Granulator auf feinteilige Dicyandiamid-haltige Harnstoff-Partikel mit Hilfe einer Einstoff-Düse aufsprüht und die im Wirbelbett bei einer Temperatur von 70 bis 90 °C gebildeten Granulate abtrennt.

Hierbei wurde überraschenderweise gefunden, daß bei der Zugabe des Dicyandiamids zu der Wasser- und Biuret-armen Harnstoffschmelze die Temperaturabsenkung durch die negative Lösungswärme des Dicyandiamids mit einer Absenkung des Erstarrungspunktes der Harnstoffschmelze einhergeht, so daß sich das Dicyandiamid sehr rasch, d. h. in der Regel in weniger als 60 Sekunden, löst.

Ebenfalls nicht vorhersehbar war der Effekt, daß das Dicyandiamid während der Granulierung als extremer Kristallisationsverzögerer wirkt und den Erstarrungspunkt im Wirbelbett auf unter 100 °C absenkt, so daß die Granulierung bei optimalen Temperaturen stattfinden kann.

Das Verfahren entsprechend der vorliegenden Erfindung umfaßt mindestens die beiden Stufen a) und b). In der ersten Stufe a) werden in eine Wasser- und Biuret-arme Harnstoffschmelze 1 bis 10 Gew.-%, vorzugsweise 4 bis 8 Gew.-%, Dicyandiamid bezogen auf das Gewicht der Harnstoffschmelze eingebracht. Die Harnstoffschmelze sollte hierbei vorzugsweise einen Wassergehalt von < 0,5 Gew.-% und einen Biuret-Gehalt von ebenfalls < 0,5 Gew.-% aufweisen. Die Verwendung dieser Wasser- und Biuret-armen Harnstoffschmelzen ermöglicht den Einsatz von Einstoff-Düsen für die Wirbelbett-Granulation entsprechend Stufe b).

Es ist hierbei als erfindungswesentlich anzusehen, daß nach dem Einbringen des Dicyandiamids in die Harnstoffschmelze diese turbulent vermischt wird, wobei diese turbulente Vermischung mit den üblichen Apparaturen bspw. in Form von Mischern oder Dispergatoren und nach bekannten Methoden während einer bevorzugten Zeitdauer von 10 bis 120 Sekunden erfolgen kann.

Im Anschluß daran wird entsprechend der Granulationsstufe b) die Dicyandiamid-haltige Harnstoffschmelze mit einer Temperatur von 120 bis 140 °C, vorzugsweise 125 bis 135 °C, in einem Wirbelbett-Granulator auf feinteilige Dicyandiamid-haltige Harnstoff-Partikel, die eine bevorzugte mittlere Teilchengröße von 0,1 bis 3,0 mm (mittels Siebanalyse ermittelt) aufweisen, mit Hilfe einer Einstoff-Düse aufgesprüht. Durch die extreme kristallisationsverzögernde Wirkung des Dicyandiamids bleiben die Schmelzetröpfchen mit einem bevorzugten mittleren Durchmesser von 250 bis 500 µm lange flüssig und haben eine hohe statistische Wahrscheinlichkeit, in flüssiger Form auf die feinteiligen Dicyandiamid-haltigen Harnstoff-Partikel zu treffen und diese zu beschichten, so daß die Staubbildung und die Agglomerisationsrate während der Granulierung auf ein Minimum reduziert werden kann.

Aufgrund dieser kristallisationsverzögernden Wirkung des Dicyandiamids ist es möglich, die Granulierung im Wirbelbett bei einer Temperatur von 70 bis 90 °C durchzuführen. Hierbei wird die zur Erzeugung des Wirbelbettes erforderliche Luft so temperiert, daß die Temperatur im Wirbelbett sich auf den gewünschten Wert einstellt. Aufgrund dieser relativ niedrigen Wirbelbett-Temperaturen ist eine schonende Granulierung mit geringer Biuret-Bildung sowie Dicyandiamid-Zersetzung möglich.

Gemäß einer bevorzugten Ausführungsform wird die Granulationsstufe in der Form durchgeführt, daß das Wirbelbett während der Granulierung mit Hilfe eines Sprudelluft-Stromes im Bereich der Eindüsungsstelle aufgelockert wird. Dieser Auflockerungseffekt wird vorzugsweise dadurch erreicht, daß die Schmelzedüsen von dem Sprudelluft-Strom umhüllt werden.

Im Anschluß an die Granulierung werden die gebildeten Dicyandiamid-haltigen Harnstoff-Granulate aus dem Wirbelbett-Granulator entfernt und gemäß einer bevorzugten Ausführungsform mit den üblichen Vorrichtungen in drei Kornfraktionen aufgetrennt, und zwar in das Feinkorn mit einer Teilchengröße < 1,6 mm, das Gutkorn mit einer Teilchengröße von 1,6 bis 5,0 mm sowie das Grobkorn mit einer Teilchengröße > 5 mm. Bei dieser bevorzugten Verfahrensvariante wird das Feinkorn und/oder das auf eine bevorzugte mittlere Teilchengröße von 1,0 bis 2,0 mm (mittels Siebanalyse ermittelt) zerkleinerte Grobkorn in den Wirbelbett-Granulator gemäß Stufe b) recyclisiert. Das Gutkorn kann nach der Abkühlung ohne weitere Aufarbeitung als verkaufsfähiges Produkt in den Handel gelangen.

Der in der Granultionsstufe b) entstehende Staub wird vorzugsweise einer Trocken- oder Naßabscheidung unterworfen und die dabei gebildete Dicyandiamid-haltigen Harnstoffpartikel oder -lösungen können ohne weiteres wiederverwertet werden, indem man diese (ggf. nach einer weitgehenden Entfernung von Wasser) in die Harnstoffschmelze zurückführt.

Mit Hilfe des erfindungsgemäßen Verfahrens lassen sich homogene Dicyandiamid-haltige Harnstoff-Granulate mit einer hohen nitrifikationshemmenden Wirkung und ausgezeichneten Festigkeits- und Lagereigenschaften herstellen, wobei dieses Verfahren wegen seines geringen technischen und energetischen Aufwandes besonders gut für den technischen Einsatz geeignet ist.

Die nachfolgenden Beispiele sollen die Erfindung näher veranschaulichen.

### Beispiel 1

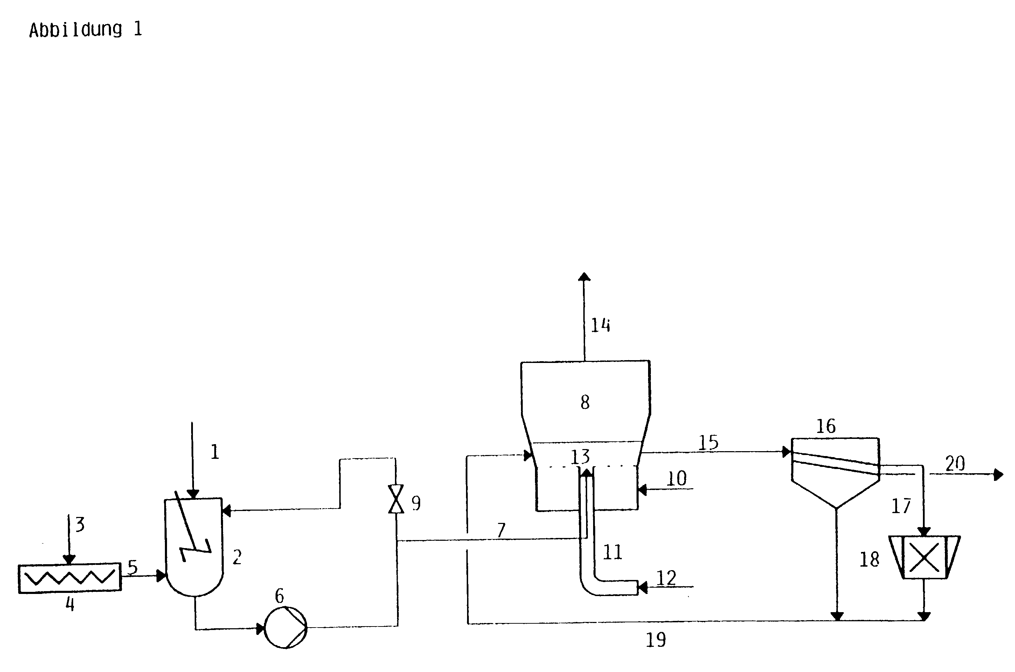

Die Verfahrensvariante gemäß Beispiel 1 entspricht dem in Abbildung 1 dargestellten Verfahren.

975 kg/h Harnstoffschmelze, die 0,4 Gew.-% Biuret und 0,2 Gew.-% Wasser enthält, gelangen über Rohrleitung 1 mit einer Temperatur von 140 °C in den Vorlagebehälter 2, wo 51,5 kg/h kristallines Dicyandiamid zugemischt werden. Das Dicyandiamid gelangt über Leitung 3 in die Dosierschnecke 4 und von dort über Leitung 5 in den Vorlagebehälter 2. Aus dem Vorlagebehälter 2 wird mittels Pumpe 6 die Harnstoffschmelze über Rohrleitung 7 in den Granulator 8 zu 50 Gew.-% auf feinteilige Dicyandiamid-haltige Harnstoff-Partikel mit einer mittleren Teilchengröße von 1,5 mm gespritzt. Über das Druckregelventil 9 wird der Spritzdruck auf 10 bar eingestellt und 50 Gew.-% der Harnstoffschmelze in den Vorlagebehälter 2 rezirkuliert.

Das in den Vorlagebehälter 2 dosierte Dicyandiamid löst sich infolge der Turbulenz in 50 Sekunden, wobei die Temperatur der Harnstoffschmelze auf 132 °C sinkt. Die Granulation erfolgt in einem herkömmlichen Wirbelbett-Granulator, wobei das Wirbelbett durch Bodenluft 10 gebildet wird, die durch eine perforierte Platte gelangt. Eingespritzt wird mittels einer Einstoff-Düse 11 in einen Bereich, wo durch Sprudelluft über Leitung 12 das Wirbelbett aufgelockert ist. Die Granulationstemperatur beträgt 79 °C. 25 kg/h Staub aus dem Wirbelbett 13 werden über den Abscheider des Granulators 8 über Kanal 14 in einen Naßabscheider (nicht dargestellt) gegeben. Die entstehende Harnstoff-Lösung wird in den Harnstoff-Prozeß zurückgeführt.

Das aus dem Granulator 8 mit 79 °C austretende Granulat geht über Rohrleitung 15 zum Sieb 16, wo es in drei Fraktionen getrennt wird. Grobkorn (> 5 mm) wird über Kanal 17 der Mühle 18 zugeführt und dort auf eine mittlere Korngröße von 1,5 mm zerkleinert. Das Feinkorn (< 2 mm) wird zusammen mit dem zerkleinerten Grobkorn über Leitung 19 in das Wirbelbett 13 recyclisiert, wo es durch aufgespritzte Schmelze vergrößert wird. 1 000 kg/h Gutkorn werden über Leitung 20 ausgeschleust. Das Dicyandiamid-haltige Harnstoff-Granulat hat einen mittleren Durchmesser von 3,5 mm, eine statische Härte von 50 N, einen Wassergehalt von 0,1 Gew.-%, einen Biuretgehalt von 0,60 Gew.-% und einen Dicyandiamid-Gehalt von 5 Gew.-%.

### Beispiel 2

Die Verfahrensvariante gemäß Beispiel 2 entspricht dem in Abbildung 1 dargestellten Verfahren.

50,5 kg/h kristallines Dicyandiamid wird bei einer Temperatur von 134 °C mit 955 kg/h Harnstoffschmelze, die 0,2 Gew.-% Biuret und 0,2 Gew.-% Wasser enthält, im Vorlagebehälter 2 mit Hilfe eines Dispergators in 30 Sekunden gelöst. Aus dem Vorlagebehälter 2 wird mittels Pumpe 6 die Harnstoffschmelze in den Granulator 8 zu 60 Gew.-% auf feinteilige Dicyandiamid-haltige Harnstoffpartikel mit einer mittleren Teilchengröße von 1,3 mm gesprüht. 40 Gew.-% der Harnstoffschmelze rezirkulieren über ein Druckregelventil in den Vorlagebehälter 2, das den Spritzdruck auf 9 bar einstellt.

Die Granulierung erfolgt im Wirbelbettgranulator 8 bei einer Betthöhe von 300 mm, wobei das Bett durch Bodenluft 10, die mit einer Geschwindigkeit von 2 m/s durch eine perforierte Platte strömt, gebildet wird. Die Dicyandiamid-haltige Schmelze wird mittels Einstoff-Düse 11 in einem Bereich verspritzt, wo das Wirbelbett örtlich durch Sprudelluft über Leitung 12 zusätzlich aufgelockert ist. Sprudelluft und Wirbelluft werden mittels Heizregister so temperiert, daß die Granulationstemperatur 80 °C beträgt. 30 kg/h Staub werden über Leitung 14 in einem Zyklon (nicht dargestellt) zugeführt, 25 kg/h davon abgeschieden, danach in den Vorlagebehälter 2 rezirkuliert und dort gelöst. Das aus dem Granulator 8 mit 80 °C austretende Granulat wird analog Beispiel 1 weiterbehandelt.

1 000 kg/h Gutkorn werden über Leitung 20 ausgeschleust. Das Dicyandiamid-haltige Harnstoff-Granulat hat einen mittleren Durchmesser von 3,4 mm, eine Härte von 45 N, einen Wassergehalt von 0,2 Gew.-%, einen Biuretgehalt von 0,45 Gew.-% und einen Dicyandiamid-Gehalt von 5 Gew.-%.

## Patentansprüche

1. Verfahren zur Herstellung von Dicyandiamid enthaltenden Harnstoff-Düngemittel-Granulaten, wobei man
a) in eine biuret-arme Harnstoffschmelze, deren Wassergehalt < 0,5 Gew.-% beträgt, 3 bis 10 Gew.-% Dicyandiamid, bezogen auf das Gewicht der Harnstoffschmelze, einbringt und diese Schmelze turbulent vermischt, sowie
b) anschließend die Dicyandiamid-haltige Harnstoffschmelze mit einer Temperatur von 120 bis 140 °C in.einem Wirbelbett-Granulator auf feinteilige Dicyandiamid-haltige Harnstoffpartikel mit Hilfe einer Einstoff-Düse aufsprüht und die im Wirbelbett bei einer Temperatur von 70 bis 90 °C gebildeten Granulate abtrennt.

2. Verfahren nach Anspruch 1, **dadurch gekennzeichnet, daß** die Harnstoffschmelze einen Biuretgehalt < 0,5 Gew.-% besitzt.

3. Verfahren nach den Ansprüchen 1 oder 2, **dadurch gekennzeichnet, daß** man in Stufe a) Dicyandiamid in einer Menge von 4 bis 8 Gew.-%, bezogen auf das Gewicht der Harnstoffschmelze, einbringt.

4. Verfahren nach den Ansprüchen 1 bis 3, **dadurch gekennzeichnet, daß** die turbulente Vermischung der Dicyandiamid-haltigen Harnstoffschmelze während einer Zeitdauer von 10 bis 120 Sekunden erfolgt.

5. Verfahren nach den Ansprüchen 1 bis 4, **dadurch gekennzeichnet, daß** die feinteiligen, Dicyandiamid-haltigen Harnstoff-Partikel eine mittlere Teilchengröße von 0,1 bis 3,0 mm aufweisen.

6. Verfahren nach den Ansprüchen 1 bis 5, **dadurch gekennzeichnet, daß** man die Dicyandiamid-haltige Harnstoffschmelze mit einer mittleren Tropfengröße von 250 bis 500 µm in das Wirbelbett eindüst.

7. Verfahren nach den Ansprüchen 1 bis 6, **dadurch gekennzeichnet, daß** das Wirbelbett während der Granulierung mit Hilfe eines Sprudelluft-Stromes im Bereich der Eindüsungsstelle aufgelockert wird.

8. Verfahren nach Anspruch 7, **dadurch gekennzeichnet, daß** die Dicyandiamid-haltige Harnstoffschmelze in der Einstoff-Düse von dem Sprudelluft-Strom umhüllt wird.

9. Verfahren nach den Ansprüchen 1 bis 8, **dadurch gekennzeichnet, daß** man die in der Stufe b) gebildeten Granulate nach deren Entfernung aus der Wirbelschicht in drei Fraktionen, bestehend aus Feinkorn (< 1,6 mm), Gutkorn (1,6 bis 5,0) und Grobkorn (> 5 mm) auftrennt und das Feinkorn sowie das zerkleinerte Grobkorn in das Wirbelbett des Granulators zurückführt.

10. Verfahren nach Anspruch 9, **dadurch gekennzeichnet, daß** das Grobkorn auf eine mittlere Teilchengröße von 1,0 bis 2,0 mm zerkleinert wird.

11. Verfahren nach den Ansprüchen 1 bis 10, **dadurch gekennzeichnet, daß** man den bei der Granulation gebildeten Staub abscheidet und gegebenenfalls wiederverwertet.

## Claims

1. Method for producing dicyandiamide-containing urea fertiliser granular material, wherein
a) into a low-biuret urea melt, of which the water content is <0.5% by weight, is introduced 3 to 10% by weight of dicyandiamide with respect to the weight of the urea melt, and this melt is mixed in a turbulent manner, and
b) the dicyandiamide-containing urea melt is then sprayed at a temperature of 120 to 140°C with the aid of an injection nozzle in a fluidised bed granulator onto finely divided dicyandiamide-containing urea particles and the granular material formed in the fluidised bed at a temperature of 70 to 90° is removed.

2. Method according to claim 1, **characterised in that** the urea melt has a biuret content of <0.5% by weight.

3. Method according to claims 1 or 2, **characterised in that** in step a) dicyandiamide is introduced in a quantity of 4 to 8% by weight with respect to the weight of the urea melt.

4. Method according to claims 1 to 3, **characterised in that** the turbulent mixing of the dicyandiamide-containing urea melt takes place during a period of 10 to 120 seconds.

5. Method according to claims 1 to 4, **characterised in that** the finely divided dicyandiamide-containing urea particles have an average particle size of 0.1 to 3.0mm.

6. Method according to claims 1 to 5, **characterised in that** the dicyandiamide-containing urea melt is injected into the fluidised bed with an average droplet size of from 250 to 500µm.

7. Method according to claims 1 to 6, **characterised in that** during the granulation process the fluidised bed is loosened with the aid of a bubbling air flow in the region of the injection site.

8. Method according to claim 7, **characterised in that** the dicyandiamide-containing urea melt is surrounded by the bubbling air flow in the injection nozzle.

9. Method according to claims 1 to 8, **characterised in that** after its removal from the fluidised bed the granular material formed in step b) is separated into three fractions consisting of fine particles (<1.6mm), product particles (1.6 to 5.0) and coarse particles (>5mm) and the fine particles and the comminuted coarse particles are returned to the fluidised bed of the granulator.

10. Method according to claim 9, **characterised in that** the coarse particles are comminuted to an average particle size of 1.0 to 2.0mm.

11. Method according to claims 1 to 10, **characterised in that** dust formed during the granulation process is removed and possibly reused.

## Revendications

1. Procédé de préparation de granules d'engrais à base d'urée contenant du dicyanodiamide où
a) on incorpore dans une matière en fusion à base d'urée pauvre en biuret, dont la teneur en eau atteint < 0,5 % en poids, 3 à 10 % en poids de dicyanodiamide, par rapport au poids de la matière en fusion à base d'urée et on mélange cette matière fondue de manière turbulente, et
b) on pulvérise ensuite la matière fondue à base d'urée contenant du dicyanodiamide à une température de 120 à 140°C dans un granulateur à lit fluidisé sur de fines particules d'urée contenant du dicyanodiamide à l'aide d'une buse uniforme et on sépare les granules formés dans le lit fluidisé à une température de 70 à 90°C.

2. Procédé selon la revendication 1, **caractérisé en ce que** la matière fondue à base d'urée possède une teneur en biuret < 0,5 % en poids.

3. Procédé selon les revendications 1 ou 2, **caractérisé en ce que** l'on incorpore à l'étape a) le dicyanodiamide en une quantité allant de 4 à 8 % en poids, par rapport au poids de la matière fondue à base d'urée.

4. Procédé selon les revendications 1 à 3, **caractérisé en ce que** le mélange turbulent de la matière fondue à base d'urée contenant du dicyanodiamide s'effectue sur une durée allant de 10 à 120 secondes.

5. Procédé selon les revendications 1 à 4, **caractérisé en ce que** les fines particules à base d'urée contenant du dicyanodiamide présentent une taille des particules moyenne allant de 0,1 à 3,0 mm.

6. Procédé selon les revendications 1 à 5, **caractérisé en ce que** l'on pulvérise la matière fondue à base d'urée contenant du dicyanodiamide ayant une taille moyenne de gouttelettes de 250 à 500 µm dans le lit fluidisé.

7. Procédé selon les revendications 1 à 6, **caractérisé en ce que** le lit fluidisé est aéré au cours de la granulation à l'aide d'un flux d'air bouillonnant dans la zone de l'endroit de la pulvérisation.

8. Procédé selon la revendication 7, **caractérisé en ce que** la matière fondue à base d'urée contenant du dicyanodiamide dans la buse uniforme est enveloppée par le flux d'air bouillonnant.

9. Procédé selon les revendications 1 à 8, **caractérisé en ce que** l'on sépare les granules formés à l'étape b) en fonction de leur éloignement de la colonne fluidisée en trois fractions, constituées du grain fin (< 1,6 mm), du bon grain (1,6 à 5,0) et du gros grain (> 5 mm) et l'on remet le grain fin et le gros grain broyé dans le lit fluidisé du granulateur.

10. Procédé selon la revendication 9, **caractérisé en ce que** le gros grain est broyé en une taille de particules moyenne de 1,0 à 2,0 mm.

11. Procédé selon les revendications 1 à 10, **caractérisé en ce que** l'on sépare la poussière formée lors de la granulation que l'on recycle éventuellement.
